Europäisches Patentamt

European Patent Office

Office européen des brevets

(19)

(11)     EP 1 038 202 B1

(12)     **FASCICULE DE BREVET EUROPEEN**

(45) Date de publication et mention
de la délivrance du brevet:
**02.04.2003 Bulletin 2003/14**

(21) Numéro de dépôt: **98958983.3**

(22) Date de dépôt: **08.12.1998**

(51) Int Cl.⁷: **G02F 1/03**

(86) Numéro de dépôt international:
**PCT/FR98/02660**

(87) Numéro de publication internationale:
**WO 99/030204 (17.06.1999 Gazette 1999/24)**

(54) **CELLULE DE POCKELS ET INTERRUPTEUR OPTIQUE A CELLULE DE POCKELS**

POCKELSZELLE UND OPTISCHER SCHALTER MIT POCKELSZELLE

POCKELS CELL AND OPTICAL SWITCH WITH POCKELS CELL

(84) Etats contractants désignés:
**DE GB IT**

(30) Priorité: **09.12.1997 FR 9715546**

(43) Date de publication de la demande:
**27.09.2000 Bulletin 2000/39**

(73) Titulaire: **COMMISSARIAT A L'ENERGIE
ATOMIQUE**
**75015 Paris (FR)**

(72) Inventeur: **LUCE, Jacques**
**F-33470 Gujan-Mestras (FR)**

(74) Mandataire: **Weber, Etienne Nicolas et al
c/o Brevatome,
3, rue du Docteur Lancereaux
75008 Paris (FR)**

(56) Documents cités:
**US-A- 3 679 289**

• **STEINMETZ L L ET AL: "Cylindrical,
ring-electrode KD*P electrooptic modulator"
APPLIED OPTICS, JULY 1973, USA, vol. 12, no.
7, pages 1468-1471, XP002074714 ISSN
0003-6935**

**Description**

Domaine technique

La présente invention concerne une cellule de Pockels et un interrupteur à cellule de Pockels. On entend par cellule de Pockels une cellule électro-optique susceptible de modifier la polarisation d'un faisceau qui la traverse par l'application d'un champ électrique sur celle-ci. Une telle cellule peut être taillée dans un cristal biréfringent dont les axes cristallographiques se trouvent déviés par la présence d'un champ électrique parallèle à l'axe optique du cristal. Ceci justifie l'appellation "cellule de Pockels à champ longitudinal".

La cellule de Pockels de l'invention est utilisée en particulier pour la réalisation d'interrupteurs ou de modulateurs optiques.

L'invention peut être mise à profit en particulier pour la fabrication d'amplificateurs régénératifs.

Etat de la technique antérieure

Les amplificateurs régénératifs utilisent un interrupteur de déclenchement à deux états. Dans un premier état des photons sont piégés et amplifiés dans une cavité laser, tandis que dans le second état les photons sont extraits de la cavité.

Pour réaliser la fonction d'interrupteur on utilise des systèmes permettant de permuter la polarisation du faisceau laser de 90° par aller-retour dans une cellule de Pockels commandée par une tension électrique.

Il s'agit de façon classique d'un barreau de cristal KDP (potassium-dihydrogène-phosphate) d'une longueur de 2 à 3 cm, aux extrémités duquel sont installées des électrodes.

Pour effectuer la commutation optique à deux états, il faut appliquer à chaque électrode successivement deux tensions indépendantes de fort potentiel (par exemple 4000 V) afin d'établir ou d'annuler un champ électrique de polarisation dans la cellule. Le passage rapide d'une tension à l'autre requiert un équipement de commutation électronique coûteux et complexe. Il s'avère en effet difficile de fournir un équipement de commutation électronique permettant à la fois l'établissement rapide d'une haute tension sur une borne et l'annulation rapide de cette tension.

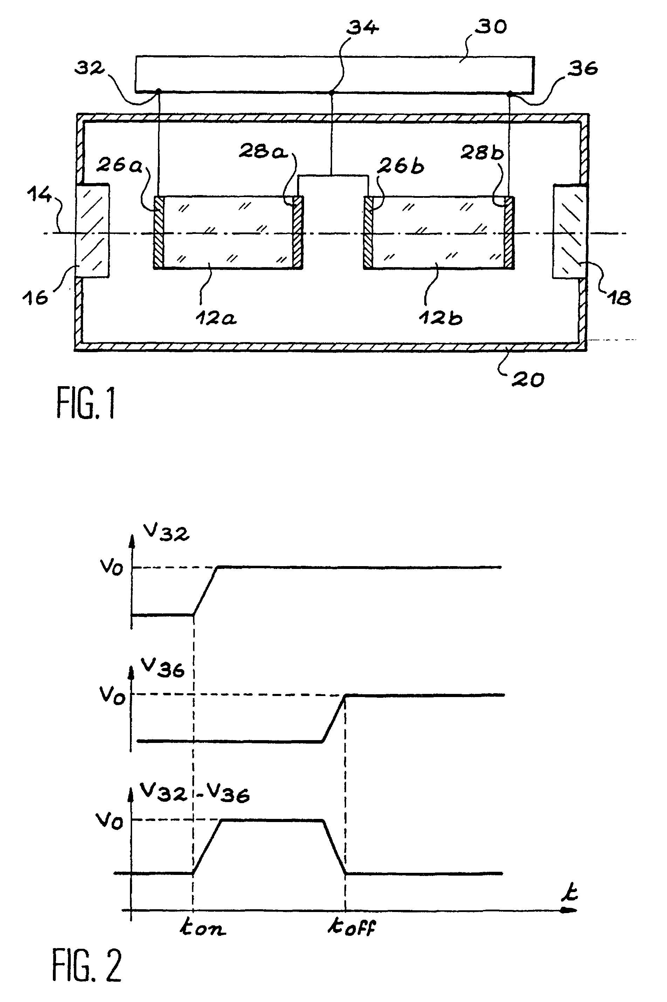

Pour éviter cette difficulté on remplace l'interrupteur à cellule de Pockels unique par un interrupteur à deux cellules de Pockels. Un tel interrupteur est décrit plus en détail ci-après en référence à la figure 1 annexée.

La figure 1 représente en coupe l'interrupteur 10 comportant deux cellules de Pockels 12a et 12b alignées sur un axe optique 14 entre un premier hublot 16 et un deuxième hublot 18. Les cellules de Pockels sont enfermées dans un boîtier étanche 20 afin de les préserver de l'humidité. L'interrupteur comporte en outre des moyens de polarisation ou d'analyse disposés devant les hublots et non représentés sur les figures pour des raisons de clarté.

Les cellules de Pockels 12a et 12b sont chacune formées d'un barreau cylindrique de KDP. Aux extrémités des barreaux de KDP sont formées des électrodes annulaires 26a, 26b, 28a, 28b. Une tension appliquée entre les électrodes d'une cellule de Pockels 12a, 12b, permet de créer dans le barreau de KDP un champ électrique parallèle à l'axe optique 14.

La tension appliquée aux électrodes est pilotée par un circuit électronique 30 présentant trois bornes de polarisation 32, 34 et 36.

La première borne de polarisation 32 est reliée à une première électrode 26a de la première cellule de Pockels 12a. La deuxième borne 34 est reliée à la fois à une deuxième électrode 28a de la première cellule de Pockels 12a et à une première électrode 26b de la deuxième cellule de Pockels 12b.

Enfin, la troisième borne 36 est reliée à une deuxième électrode 28b de la deuxième cellule de Pockels.

Le fonctionnement de l'interrupteur est expliqué en référence à la figure 2.

La figure 2 indique sous forme de graphiques les tensions $V_{32}$ et $V_{36}$ appliquées aux première et troisième bornes du circuit électronique 30 en fonction du temps. Elle indique également la différence de tension $V_{32}$-$V_{36}$.

Les tensions $V_{32}$ et $V_{36}$ sont exprimées par rapport à un potentiel de masse qui est appliqué de façon constante à la deuxième borne 34 du circuit électronique 30.

A partir d'un instant initial de commutation noté $t_{on}$ une haute tension $V_0$ est appliquée à la première borne 32. Un faisceau traversant la première cellule de Pockels subit alors un déphasage de $\lambda/4$ ($\lambda/2$ lorsque le faisceau effectue un aller-retour dans la cellule). La deuxième cellule non polarisée n'introduit à ce moment aucun déphasage.

On définit un temps de montée comme étant le temps nécessaire pour établir la tension $V_{32}$ de la première borne a une valeur de haute tension $V_0$, à partir d'un instant ou cette borne est à la tension de masse. Ce temps de montée est de l'ordre de 3 ns.

Comme évoqué précédemment, pour des raisons de construction du circuit électronique, il est difficile d'opérer une commutation de haute tension $V_0$ vers le potentiel de masse dans un temps aussi court que le temps de montée évoqué précédemment. Le temps de montée pour établir la haute tension est donc plus bref que le temps requis pour l'annuler.

Ainsi, pour interrompre rapidement l'effet de la polarisation de la première cellule de Pockels, la haute tension $V_0$ est également appliquée à la troisième borne 36, c'est-à-dire sur la deuxième cellule de Pockels.

Le champ électrique établi dans la deuxième cellule de Pockels 12b est alors opposé en sens au champ existant dans la première cellule de Pockels 12a.

Le faisceau lumineux subit dans la deuxième cellule un déphasage de $-\lambda/4$.

Le faisceau traversant l'interrupteur subit ainsi un premier déphasage de $+\lambda/4$ dans la première cellule 12a et un deuxième déphasage de $-\lambda/4$ dans la deuxième cellule 12b et ressort ainsi du dispositif avec un déphasage nul. Le comportement de l'interrupteur est alors le même que dans l'état où aucune des cellules n'est polarisée. Une commutation optique rapide peut ainsi être obtenue.

Sur la figure 2, l'instant auquel la tension $V_{36}$ de la troisième borne est établie à la valeur $V_0$ est indiqué par $t_{off}$. On peut noter que le temps de montée de cette tension est également de l'ordre de 3 ns.

Finalement, l'interrupteur optique est ouvert avant l'instant $t_{on}$ et après l'instant $t_{off}$. Pendant le temps $t_{off}$-$t_{on}$, dit temps de création de l'impulsion laser on a $V_{32}$-$V_{35}$=$V_0$ et l'interrupteur est fermé car le déphasage total que subit un faisceau lumineux effectuant un double passage dans l'interrupteur est de $\lambda/2$ ($\lambda/4$+$\lambda/4$).

A titre de complément d'information concernant la fabrication du circuit électronique 30 du dispositif de la figure 1, on peut se reporter à la demande de brevet française FR-A-2 752 344 du 8 JUIN 1996.

La réalisation d'un dispositif électro-optique tel que décrit ci-dessus présente un certain nombre de difficultés parmi lesquelles on peut citer principalement l'alignement des cellules de Pockels.

Il est en effet nécessaire d'aligner parfaitement les deux cellules de Pockels 12a, 12b sur l'axe optique 14.

Par ailleurs, l'utilisation de deux cellules identiques, pour augmenter les vitesses de commutation, multiplie le coût de réalisation du dispositif.

Enfin, lorsqu'il traverse le dispositif, le faisceau rencontre les quatre faces des cellules de Pockels et subit ainsi une atténuation assez importante de son intensité.

Le document US-A-3 679 289 montre un dispositif dans lequel deux cellules de Pockels sont montées en série par interposition d'une troisième électrode commune, entre des première et deuxième électrodes.

Exposé de l'invention

La présente invention a pour but de proposer une cellule de Pockels double, utilisable par exemple dans un interrupteur optique telle que décrit précédemment et qui ne présente pas les difficultés rencontrées, mentionnées ci-dessus.

Un but est en particulier de proposer une telle cellule avec laquelle il est possible de réaliser un interrupteur ou un modulateur électro-optique sans prendre de mesures pour l'alignement de cellules optiques sur un même axe optique.

Un but est encore de proposer un dispositif électro-optique de faible coût dans lequel l'atténuation d'un faisceau lumineux peut être réduit comparativement aux dispositifs connus.

Pour atteindre ces buts, l'invention a plus précisément pour objet une cellule de Pockels double comportant :

- un barreau unique de matériau biréfringent s'étendant continûment entre une première et une deuxième extrémités,
- une première et une deuxième électrodes, disposées aux extrémités du barreau,
- une troisième électrode, disposée sur le barreau entre les première et deuxième électrodes.

Les électrodes sont par exemple, des électrodes annulaires entourant le barreau selon sa circonférence.

Grâce à la troisième électrode, deux champs électriques, de direction opposée ou non, peuvent être établis, simultanément ou non, entre la troisième électrode et les première et deuxième électrodes.

Ainsi, le barreau de matériau électrobiréfringent peut être utilisé à l'instar de deux cellules de Pockels alignées sur un même axe.

Cependant, un faisceau de lumière traversant la cellule de l'invention ne rencontre que deux faces d'extrémité, et n'est par conséquent que faiblement atténué.

De plus, le coût de fabrication de la cellule double de l'invention est sensiblement le même que celui d'une cellule ordinaire unique à deux électrodes.

Selon une réalisation particulière avantageuse, la troisième électrode peut être située de façon sensiblement équidistante desdites première et deuxième électrodes.

Grâce à cette caractéristique, un champ électrique de même intensité peut être formé dans la cellule de part et d'autre de la troisième électrode, par l'application d'une tension de même valeur aux première et deuxième électrodes d'extrémité.

D'autres caractéristiques et avantages de l'invention ressortiront mieux de la description qui va suivre, en référence aux figures des dessins annexés. Cette description est donnée à titre purement illustratif et non limitatif.

Brève description des figures

- La figure 1, déjà décrite, est une représentation schématique en coupe d'un interrupteur électro-optique, de type connu, utilisant deux cellules de Pockels.
- La figure 2, déjà décrite, représente sous la forme de graphiques des tensions de polarisation appliquées aux cellules de l'interrupteur électro-optique de la figure 1.
- La figure 3 montre, de façon schématique, une cellule de Pockels double, conforme à l'invention, et un dispositif électro-optique utilisant cette cellule.

## Description détaillée d'un mode de mise en oeuvre de l'invention

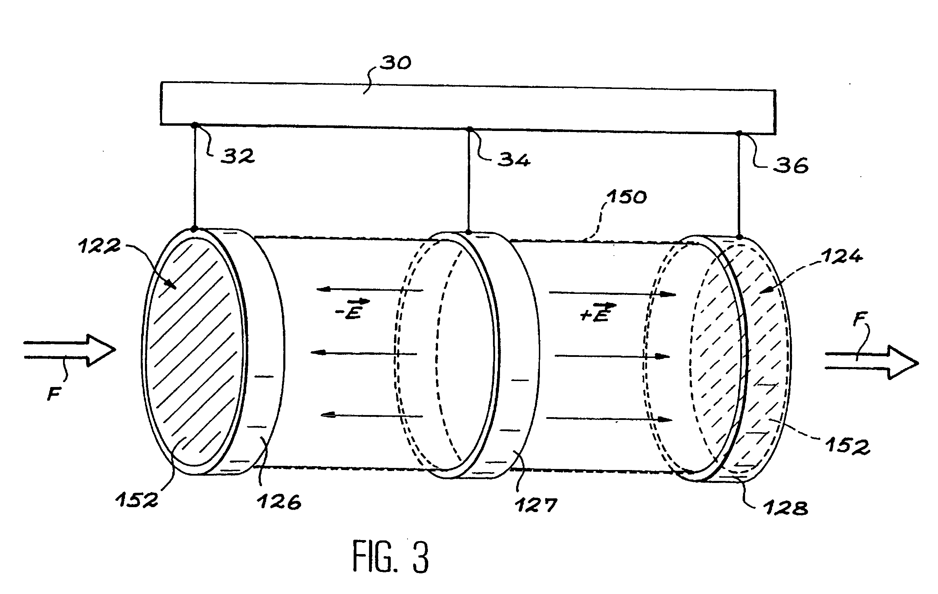

La cellule de Pockels représentée à la figure 3 est formée à partir d'un barreau cristallin de KDP (potassium-dihydrogène-phosphate) deutéré ou équivalent. Le barreau, en forme de cylindre, présente une longueur de l'ordre de 40 mm et un diamètre de l'ordre de 10 mm. Ce barreau peut être recouvert d'un film de protection anti-humidité 150.

Le barreau présente une première face d'extrémité 122 et une deuxième face d'extrémité 124. Ces faces qui constituent les faces d'entrée et de sortie du cristal et sont de préférence traitées selon une méthode dite sol-gel pour y former un revêtement antireflet 152. Le revêtement antireflet 152 est, par exemple, un polymère fluoré à bas indice de réfraction ($n \approx 1,3$). On peut ainsi obtenir un coefficient de transmission global de lumière supérieur à 98%.

Sur la figure un faisceau lumineux orienté selon l'axe du barreau cylindrique de la cellule est représenté sous la forme de flèches F.

Des première et deuxième électrodes 126, 128 sont formées sur le barreau en ses extrémités, par évaporation, sous la forme de minces couches, en un matériau conducteur électrique tel que du NiCu. Les électrodes sont de forme annulaire et sont déposées sur la circonférence du barreau.

Une troisième électrode 127 est formée à la surface du barreau de KDP, de façon sensiblement équidistante des première et deuxième électrodes.

La troisième électrode 127 également déposée par évaporation de métal, se présente, comme les première et deuxième électrodes, sous la forme d'une bague ou d'une armille entourant le barreau 112.

On peut noter que pour des raisons de clarté les épaisseurs des électrodes 126, 127, 128 sont exagérées sur la figure 3. Cette épaisseur est de l'ordre de 10 µm.

La cellule peut être utilisée dans un modulateur ou un interrupteur électro-optique. Dans ce cas, elle est par exemple pilotée par un circuit électronique à transistors MOSFET 30.

Le circuit 30 de la figure 3 présente une première, une deuxième et une troisième bornes 32, 34, 36 et est du même type que celui utilisé pour le dispositif de la figure 1.

Les première, deuxième et troisième bornes 32, 34, 36 sont respectivement reliées à la première 126, à la troisième 127 et à la deuxième 128 électrode de la cellule de l'invention.

Ainsi, pour le fonctionnement de la cellule, on peut se reporter à la figure 2 et à la description correspondante.

La tension $V_0$ appliquée indépendamment entre la première et la troisième électrodes et/ou entre la deuxième électrode et la troisième électrode, est de l'ordre de 4000 V par exemple. A titre d'exemple, une tension de masse de 0V peut être maintenue en permanence sur la troisième électrode 127 tandis que les première et deuxième électrodes se voient alternativement appliquer la haute tension ou la tension de masse.

Sur la figure 3, on a représenté les champs $-\bar{E}$ et $+\bar{E}$, établis respectivement dans le cristal entre la première 126 et la troisième 127 électrodes et entre la deuxième 128 et la troisième 127 électrodes lorsque les potentiels des première, deuxième et troisième électrodes sont respectivement $V_0$, 0 et $V_0$.

Dans d'autres applications, la cellule peut être polarisée de sorte que les champs électriques entre les électrodes ne s'opposent pas mais s'additionnent.

Ainsi, les composantes du champ électrique du faisceau traversant la cellule peuvent être déphasées, par exemple, de $\lambda/4 + \lambda/4$, soit $\lambda/2$ où $\lambda$ est la longueur d'onde du faisceau F. Un tel faisceau est alors déphasé de $\lambda$ lorsqu'il effectue un aller-retour à travers la cellule.

## Revendications

1. Cellule de Pockels double comportant :

   - un barreau unique de matériau biréfringent s'étendant continûment entre une première (122) et une deuxième (124) extrémités,
   - une première et une deuxième électrodes (126, 128), déposées aux extrémités du barreau,

   **caractérisée en ce qu'**elle comporte en outre :

   - une troisième électrode (127) formée sur le barreau entre les première et deuxième électrodes.

2. Cellule de Pockels selon la revendication 1, dans laquelle la troisième électrode (127) est sensiblement équidistante desdites première et deuxième électrodes (126, 128).

3. Cellule de Pockels selon 1a revendication 1, dans laquelle les électrodes sont des électrodes annulaires déposées à la surface du barreau sous la forme d'une bague entourant ledit barreau.

4. Cellule de Pockels selon la revendication 1, dans laquelle le barreau est recouvert d'un film de protection anti-humidité (150).

5. Cellule de Pockels selon la revendication 1 dans laquelle le barreau est en potassiumdihydrogène-phosphate KDP deutéré.

**6.** Cellule de Pockels selon la revendication 1, comportant des première et deuxième faces d'extrémité pourvues d'un revêtement antireflet (152).

**7.** Cellule de Pockels selon la revendication 6, dans lequel le revêtement antireflet (152) est en un matériau polymère fluoré à bas indice de réfraction.

**8.** Dispositif électro-optique comportant une unique cellule de Pockels conforme à l'une quelconque des revendications précédentes.

**9.** Dispositif électro-optique selon la revendication 8, comprenant un circuit électronique (30) pour relier en permanence la troisième électrode à un potentiel de masse, et pour relier indépendamment et alternativement les première et deuxième électrodes (126, 128) à un potentiel de haute tension ($V_0$) et un potentiel de masse.

## Claims

**1.** Dual Pockels cell comprising:

- a single bar (112) in. birefractive material extending continuously between a first (122) and a second (124) end,
- a first and a second electrode (126, 128), deposited on the ends of the bar,

   **characterised in that** it also comprises:

- a third electrode (127) formed on the bar between the first and second electrodes.

**2.** Pockels cell according to claim 1, in which the third electrode (127) is substantially equidistant from said first and second electrodes (126, 128).

**3.** Pockels cell according to claim 1, in which the electrodes are ring-shaped electrodes deposited on the surface of the bar in the form of a ring surrounding said bar.

**4.** Pockels cell according to claim 1, in which the bar is coated with a humidity-protection film (150).

**5.** Pockets cell according to claim 1, in which the bar is in deuterated KDP (potassium-dihydrogen-phosphate).

**6.** Pockels cell according to claim 1, comprising first and second end faces provided with an antireflective coating (152).

**7.** Pockels cell according to claim 6, in which the antireflective coating (152) is in a fluorine polymer material with a low refractive index.

**8.** Electro-optical device comprising a single Pockels cell according to any of the preceding claims.

**9.** Electro-optical device according to claim 8, comprising an electronic circuit (30) to permanently connect the third electrode to a mass potential, and to connect independently and alternately the first and second electrodes (126, 128) to high voltage potential ($V_0$) and a mass potential.

## Patentansprüche

**1.** Doppel-Pockelszelle, umfassend:

- einen einzigen Stab aus doppelbrechendem Material, der sich kontinuierlich zwischen einem ersten (122) und einem zweiten (124) Ende erstreckt,
- eine erste und eine zweite Elektrode (126, 128), abgeschieden an den Enden des Stabs,

   **dadurch gekennzeichnet, dass** sie außerdem umfasst:

- eine dritte Elektrode (127), ausgebildet auf dem Stab, zwischen der ersten und der zweiten Elektrode.

**2.** Pockelszelle nach Anspruch 1, bei der die dritte Elektrode (127) im Wesentlichen äquidistant ist von der ersten und der zweiten Elektrode (126, 128).

**3.** Pockelszelle nach Anspruch 1, bei der die Elektroden ringförmige Elektroden sind, abgeschieden auf der Oberfläche des Stabs in Form von Ringen, die diesen Stab umschließen.

**4.** Pockelszelle nach Anspruch 1, bei der der Stab mit einem Anti-Feuchtigkeits-Schutzfilm (150) überzogen ist.

**5.** Pockelszelle nach Anspruch 1, bei der der Stab aus deuteriertem Kaliumdihydrogenphosphat KDP ist.

**6.** Pockelszelle nach Anspruch 1, erste und zweite Endflächen aufweisend, versehen mit einem Antireflex-Überzug (152).

**7.** Pockelszelle nach Anspruch 1, bei der der Antireflex-Überzug (152) aus einem fluorierten polymeren Material mit niedriger Brechzahl ist.

**8.** Elektrooptische Vorrichtung mit einer einzigen Pokkelszelle nach einem der vorangehenden Ansprüche.

9. Elektrooptische Vorrichtung nach Anspruch 8 mit einer elektrooptischen Schaltung (30), um die dritte Elektrode permanent mit einem Massepotential zu verbindens und um die erste und die zweite Elektrode (126, 128) mit einem Hochspannungspotential ($V_0$) und einem Massepotential zu verbinden.

FIG. 1

FIG. 2

FIG. 3

EP 1 038 202 B1